# EUROPÄISCHE PATENTSCHRIFT

(11) **EP 3 056 263 B1**
(45) Veröffentlichungstag und Bekanntmachung des Hinweises auf die Patenterteilung: **20.01.2021**
(21) Anmeldenummer: 16153364.1
(22) Anmeldetag: 29.01.2016
(51) Int. Cl.: B01F 7/00, B01F 13/00, B01F 15/00, B29B 7/74

(54) **DOSIERMASCHINE**
DOSING MACHINE
DOSEUR

(30) Priorität: 10.02.2015 DE 202015100624 U
(43) Veröffentlichungstag der Anmeldung: 17.08.2016
(73) Patentinhaber: Exel Industries S.A., 51200 Epernay (FR)
(72) Erfinder: Bielenberg, Jörn, 50374 Erftstadt (DE); Andre, Mathias, 50931 Köln (DE); Lamm, Lev, 50169 Kerpen (DE)
(74) Vertreter: Keenway Patentanwälte Neumann Heine Taruttis

(56) Entgegenhaltungen:
- DE-U1-202005 013 008
- US-A- 3 578 876

## Beschreibung

Die vorliegende Erfindung betrifft eine Dosiermaschine zur Herstellung eines Gemisches, insbesondere eines 2-Komponenten-Klebstoffs, mit einem Gehäuse und einer hierin gelagerten Mischerwelle, an deren Stirnseite ein Rotor angeordnet ist, wobei die Mischerwelle von einer Betriebsposition, bei der der Rotor in eine lösbar mit dem Gehäuse verbundene Mischerkammer eingreift, nach dem Entfernen der Mischerkammer in eine Wartungsposition längsaxial verschiebbar ist, bei der der Rotor frei zugänglich ist.

Derartige Dosiermaschinen werden insbesondere im Automobilbau eingesetzt, um die beiden Komponenten eines 2-Komponenten-Klebstoffs zu einer homogenen Masse zu verbinden und unmittelbar in Form einer Klebstoffraupe aufzutragen. Insbesondere bei schnell aushärtenden Klebstoffen ist es erforderlich, dass der Mischprozess schnell und intensiv ist, um ein ungleichmäßiges und/oder zu schnelles Aushärten des Klebstoffs zu vermeiden.

Die nach dem Stand der Technik bekannten Dosiermaschinen weisen hierzu einen Rotor auf, der innerhalb einer Mischerkammer mit Drehgeschwindigkeiten von ca. 1.500 Umdrehungen pro Minute rotiert. Dabei weisen die Außenwände des Rotors eine riefenartige Struktur auf, so dass die in die Mischerkammer eingebrachten Komponenten schnell und effektiv vermengt und in Richtung der Auslassöffnung transportiert werden. Die Effektivität der Dosiermaschine hängt einerseits von der Drehgeschwindigkeit des Rotors und andererseits von dem Abstand zwischen dem Rotor und den Innenwänden der Mischerkammer (bzw. den Außenwänden der Ausnehmung innerhalb der Mischerkammer) ab. Je geringer das Spaltmaß dabei ist, desto effektiver und schneller werden die Komponenten vermischt. Bei modernen Dosiermaschinen beträgt das Spaltmaß üblicherweise wenige Zehntel Millimeter.

Bei den üblichen Drehgeschwindigkeiten des Rotors und dem gewünschten geringen Spaltmaß zwischen dem Rotor und der Mischerkammer ist eine besonders stabile Lagerung der Mischerwelle zu gewährleisten, damit der Rotor nicht in Berührung mit der Mischerkammer kommt. Eine möglichst stabile Lagerung einer rotierenden Welle wird mittels einer Rollen- oder Kugellagerung bewirkt. Nachteiliger Weise ist auch aufgrund spezieller Dichtungen für eine rotierende Lagerung einer Welle eine axiale Verschiebung der Welle innerhalb des Rollen- oder Kugellagers nicht möglich, weshalb solche Dosiermaschinen, insbesondere im Spaltbereich zwischen dem Rotor und dem Gehäuse nur schwer zu reinigen sind.

Alternativ haben sich Dosiermaschinen etabliert, deren Mischerwellen gleitlagergeführt sind, was zwar eine längsaxiale Verschiebung der Welle zu Wartungs- und Reinigungsarbeiten erlaubt, jedoch zu Lasten der stabilen Führung der Wellen geht, womit Berührungen zwischen dem Rotor und der Mischerkammer nicht ausgeschlossen sind. Ferner werden die Dichtungen sowohl translatorisch als auch rotatorisch belastet, weshalb sich trotz der vorteilhaften Reinigungsmöglichkeiten eine vergleichsweise geringe Standzeit solcher Dosiermaschinen ergibt.

DE 20 2005 013 008 U1 offenbart eine Vorrichtung zum Mischen und Aufbringen eines aus mindestens zwei Komponenten bestehenden pastösen Materials auf ein Substrat und mithin eine Dosiermaschine der eingangs angegebenen Art.

Es ist daher Aufgabe der vorliegenden Erfindung, eine Dosiermaschine vorzuschlagen, die einerseits leicht zu warten und zu reinigen ist und andererseits eine genaue Führung der Mischerwelle ermöglicht, so dass sich die Standzeit der Dosiermaschine erhöht.

Diese Aufgabe wird durch die Dosiermaschine nach Anspruch 1 gelöst, wonach erfindungsgemäß vorgesehen ist, dass die Mischerwelle innerhalb einer Hohlwelle gelagert ist und mit der Hohlwelle drehfest verbindbar ist, wobei die Hohlwelle drehbar innerhalb des Gehäuses gelagert ist. Hierdurch lassen sich die Vorteile einer rollen- oder kugellagergeführten Welle bezüglich der genauen Führung mit einer gleitlagergeführten Welle verbinden, die längsaxial verschiebbar ist und mithin von einer Betriebsposition in eine Wartungsposition verschoben werden kann. Ferner kann das Dichtungssystem entlastet werden, da dynamische Dichtungen für die spezielle Relativbewegung eingesetzt werden können, die somit vergleichsweise weniger stark verschleißen.

Bevorzugte Ausführungsformen der vorliegenden Erfindung werden im Folgenden sowie in den Unteransprüchen offenbart.

Nach einer ersten bevorzugten Ausführungsform der Erfindung ist vorgesehen, dass die Hohlwelle über eine Kupplung mit einem Motor, vorzugsweise einem Mischermotor, verbunden ist, dessen Drehzahl in Abhängigkeit der Durchflussmenge des Gemisches der Dosiermaschine wählbar ist. Hierdurch kann die Mischenergie flexibel angepasst werden, was bei langen Kleberaupen und kurzen Tropfzeiten vorteilhaft ist, damit nach der Applikation der Kleberaupe überall der gleiche Reaktionszustand vorliegt.

Nach einer weiteren bevorzugten Ausgestaltung der Erfindung ist vorgesehen, dass die Hohlwelle und die Mischerwelle mittels einer Arretierung in zwei beabstandeten Positionen lösbar miteinander verbunden sind, wozu vorzugsweise Aufnahmebohrungen in der Hohlwelle und der Mischerwelle vorgesehen sind, die von einem Bolzen durchgriffen werden. Eine derartige Arretierung ist einfach herzustellen und zu bedienen, um die Dosiermaschine aus einer Betriebsposition in die Wartungsposition zu überführen. Ferner lässt sich durch die Wahl eines geeigneten Bolzens ohne weiteres eine drehmomentfreie Arretierung schaffen, womit etwaige Unwuchten vermieden werden.

Um auch bei hohen Drehgeschwindigkeiten von ca. 1.500 Umdrehungen pro Minute eine stabile Lagerung der Hohlwelle und mithin auch der Mischerwelle zu schaffen, ist nach einer bevorzugten Ausgestaltung der Erfindung vorgesehen, dass die Hohlwelle innerhalb des Gehäuses kugel- oder rollenlagergeführt ist. Ferner ist vorzugsweise vorgesehen, dass zwischen der Hohlwelle und dem Gehäuse mindestens eine rotatorische Dichtung angeordnet ist. Solche Dichtungen sind speziell für die rotatorische Bewegung ausgebildet und verschleißen daher weniger stark als Dichtungen, die unterschiedliche Bewegungen der Wellen (translatorisch und rotatorisch) erlauben und aufgrund des erhöhten Anforderungsprofils vergleichsweise empfindlicher und teurer sind. Der geringe Verschleiß der rotatorischen Dichtung ist insbesondere auf die Entlastung der Dichtung zurückzuführen.

Demgegenüber ist die Mischerwelle innerhalb der Hohlwelle gleitlagergeführt, was eine axiale Bewegung der Mischerwelle innerhalb der Hohlwelle erlaubt. Hierdurch lässt sich die Dosiermaschine bequem in eine Wartungsposition bringen, bei der der Rotor um ein ausreichendes Maß aus dem Gehäuse herausragt, so dass der Spalt zwischen dem Rotor und dem Gehäuse, der Rotor selbst und die Auflage- und Führungsflächen zwischen dem Rotor und der Welle gründlich gereinigt werden können, zumal nicht dauerhaft verhindert werden kann, dass sich dort Klebstoffreste ansammeln und durch einen unrunden Lauf des Rotors nach und nach die Funktionsfähigkeit der Dosiermaschine negativ beeinflussen.

Vorzugsweise ist zwischen der Hohlwelle und der Mischerwelle mindestens eine translatorische Dichtung angeordnet, die eine axiale bzw. translatorische Bewegung zwischen der Mischerwelle und der Hohlwelle erlaubt, ohne hierbei übermäßig zu verschleißen.

Ferner ist nach einer weiteren bevorzugten Ausgestaltung der Erfindung vorgesehen, dass das Gehäuse eine Ausnehmung aufweist, in der ein Teil des Rotors in der Betriebsposition ruht. In diesem Bereich des Gehäuses mündet eine beliebige Anzahl von Ventilen, die jeweils in unterschiedlichen Positionen in die Ausnehmung des Gehäuses münden und die Komponenten des Gemisches in wählbarer Dosierung zuführen.

Schließlich ist vorzugsweise vorgesehen, dass die Mischerkammer lösbar mit dem Gehäuse verbunden ist und eine topfförmige Ausnehmung besitzt, innerhalb welcher der Rotor in der Betriebsposition ruht, sowie eine Kanüle zur Applikation des Gemisches. Die lösbare Befestigung der Mischerkammer ermöglicht in erster Linie die Zugänglichkeit des Rotors und ferne eine gründliche Reinigung der Ausnehmung und der Kanüle.

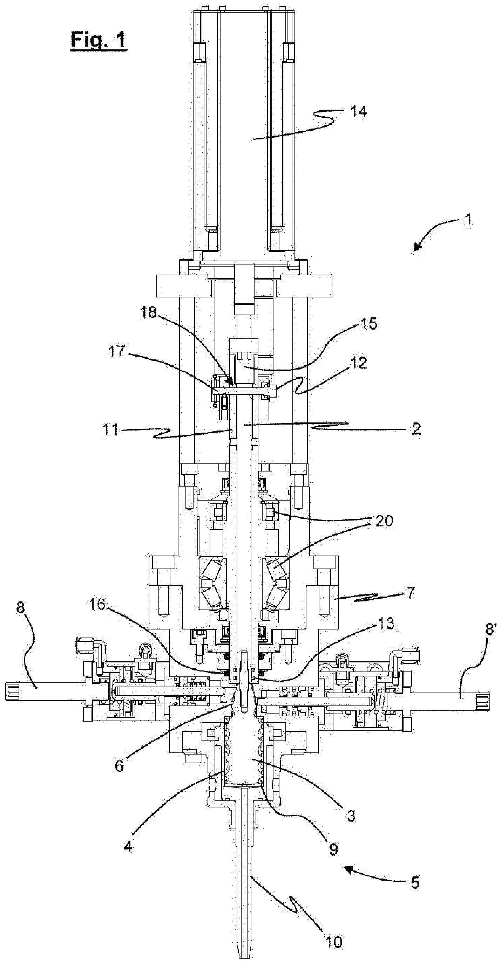

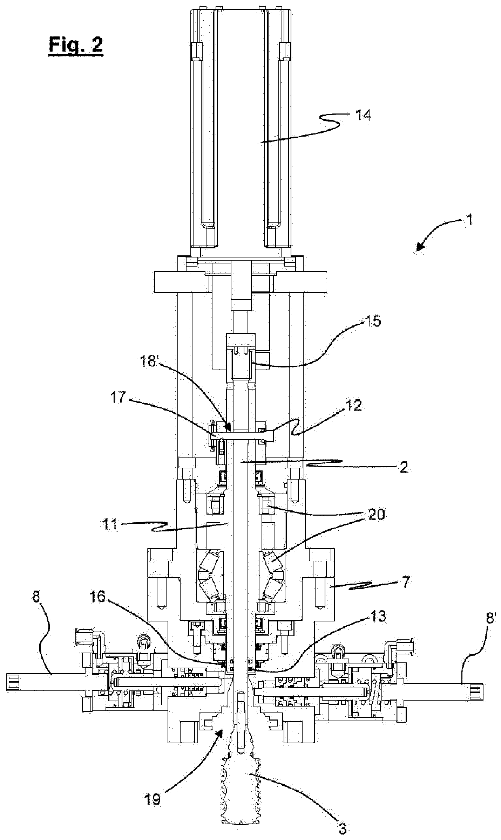

Konkrete Ausgestaltungen der Erfindung werden anhand der Zeichnungen erläutert, die eine Dosiermaschine in der Betriebsposition (Fig. 1) und der Wartungsposition (Fig. 2) zeigen.

Fig. 1 zeigt eine konkrete Ausführungsform einer erfindungsgemäßen Dosiermaschine 1, mit der insbesondere ein homogenes Gemisch aus einem 2-Komponenten-Klebstoff herstellbar ist. Hierzu besitzt die Dosiermaschine eine Mischerwelle 2, die drehbar gelagert ist und an deren Stirnseite ein Rotor 3 angeordnet ist. Der Rotor 3 ruht in der dargestellten Betriebsposition zum Teil innerhalb einer Ausnehmung 4 der Mischerkammer 5 und zum anderen Teil innerhalb einer Ausnehmung 6 des Gehäuses 7. In diesen Teilbereich des Gehäuses 7 münden auch Zuführleitungen der Ventile 8, 8', die die Komponenten des 2-Komponenten-Klebstoffs der Mischerkammer 5 zuführen. Zum Vermischen der Komponenten rotiert der Rotor 3 und die Komponenten werden innerhalb des Spaltes 9 zwischen dem Rotor 3 und dem Gehäuses 7 bzw. der Mischerkammer 5 vermengt und in Richtung der Kanüle 10 der Mischerkammer 5 transportiert, wo der 2-Komponenten-Klebstoff appliziert wird.

Die Mischerwelle 2 ist innerhalb einer Hohlwelle 11 gleitlagergeführt und drehfest über eine lösbare Arretierung 12 mit der Hohlwelle 11 verbunden, wozu ein Bolzen 17 in entsprechende Bohrungen 18 der Wellen eingreift. Damit in den Zwischenraum zwischen der Hohlwelle 11 und der Mischerwelle 2 keine Verunreinigungen eindringen, sind translatorische Dichtungen 13 vorgesehen, die eine translatorische Bewegung der Hohlwelle 11 gegenüber der Mischerwelle 2 erlauben.

Die Hohlwelle 11 ist über das Rollenlager 20 drehbar innerhalb des Gehäuses 7 gelagert und wird über einen Motor 14 angetrieben, der hierzu über eine Kupplung 15 mit der Hohlwelle 11 verbunden ist. Damit keine Verunreinigungen, insbesondere Klebstoffreste oder dergleichen in den Spalt zwischen der Hohlwelle 11 und dem Gehäuse 7 eindringen, sind rotatorische Dichtungen 16 vorgesehen, die eine rotierende Bewegung zwischen der Hohlwelle 11 und dem Gehäuse 7 erlauben.

Insgesamt ergibt sich durch die beschriebene Konstruktion nicht nur die Möglichkeit einer stabilen und verschleißarmen Rotation der Wellen, sondern auch eine einfache und verschleißarme Verschiebbarkeit der Mischerwelle 2 in eine Wartungsposition, die in Fig. 2 dargestellt ist. Hierzu werden zunächst die lösbar mit dem Gehäuse 7 verbundene Mischerkammer 5 und die Arretierung 12 in Form des Bolzens 17 entfernt, so dass die Mischerwelle 2 um ein gewisses Maß aus dem Gehäuse 7 herausgezogen werden kann. In dieser Position (dargestellt in Fig. 2) ist eine weitere Bohrung 18' zur Aufnahme des Bolzens 17 vorgesehen, so dass die Mischerwelle 2 in der Wartungsposition arretierbar ist. Zur Reinigung der Dosiermaschine 1 ist nun der Spalt zwischen dem Rotor 3 und dem Gehäuse 7 frei zugänglich (Pfeil 19), so dass etwaige Klebstoffreste oder andere Verunreinigungen einfach entfernt werden können. Die Mischerkammer 5 ist ebenfalls einfach zu reinigen, zumal sie ohnehin von dem Gehäuse gelöst werden kann.

Um die Dosiermaschine wieder in den Betriebszustand zu überführen, wird die Arretierung 12 gelöst, die Mischerwelle 2 in die Betriebsposition zurückgeschoben und dort arretiert. Anschließend wird die Mischerkammer 5 auf den Rotor geschoben und am Gehäuse 7 fixiert.

## Patentansprüche

1. Dosiermaschine zur Herstellung eines Gemisches, insbesondere eines 2-Komponenten-Klebstoffs, mit einem Gehäuse (7) und einer hierin gelagerten Mischerwelle (2) an deren Stirnseite ein Rotor (3) angeordnet ist, wobei die Mischerwelle (2) von einer Betriebsposition, bei der der Rotor (3) in eine lösbar mit dem Gehäuse (7) verbundene Mischerkammer (5) eingreift, nach dem Entfernen der Mischerkammer (5) in eine Wartungsposition längsaxial verschiebbar ist, bei der der Rotor (3) frei zugänglich ist,
**dadurch gekennzeichnet, dass**
die Mischerwelle (2) innerhalb einer Hohlwelle (11) gelagert ist und mit der Hohlwelle (11) drehfest verbindbar ist, wobei die Hohlwelle (11) drehbar innerhalb des Gehäuses (7) gelagert ist.

2. Dosiermaschine nach Anspruch 1, **dadurch gekennzeichnet, dass** die Hohlwelle (11) über eine Kupplung (15) mit einem Motor (14), vorzugsweise einem Mischermotor, verbunden ist, dessen Drehzahl in Abhängigkeit der Durchflussmenge des Gemisches der Dosiermaschine (1) wählbar ist.

3. Dosiermaschine nach einem der Ansprüche 1 oder 2, **dadurch gekennzeichnet, dass** die Hohlwelle (11) und die Mischerwelle (2) mittels einer Arretierung (12) in zwei beabstandeten Positionen lösbar miteinander verbindbar sind, wozu vorzugsweise Aufnahmebohrungen (18, 18') in der Hohlwelle (11) und der Mischerwelle (2) vorgesehen sind, die von einem Bolzen (17) durchgriffen werden.

4. Dosiermaschine nach einem der Ansprüche 1 bis 3, **dadurch gekennzeichnet, dass** die Hohlwelle (11) innerhalb des Gehäuses (7) kugel- oder rollenlagergeführt ist.

5. Dosiermaschine nach einem der Ansprüche 1 bis 4, **dadurch gekennzeichnet, dass** zwischen der Hohlwelle (11) und dem Gehäuse (7) mindestens eine rotatorische Dichtung (16) angeordnet ist.

6. Dosiermaschine nach einem der Ansprüche 1 bis 5, **dadurch gekennzeichnet, dass** die Mischerwelle (2) innerhalb der Hohlwelle (11) gleitlagergeführt ist.

7. Dosiermaschine nach einem der Ansprüche 1 bis 6, **dadurch gekennzeichnet, dass** zwischen der Hohlwelle (11) und der Mischerwelle (2) mindestens eine translatorische Dichtung (13) angeordnet ist.

8. Dosiermaschine nach einem der Ansprüche 1 bis 7, **gekennzeichnet durch** eine Ausnehmung (4) innerhalb des Gehäuses (7), worin ein Teil des Rotors (3) in der Betriebsposition ruht.

9. Dosiermaschine nach einem der Ansprüche 1 bis 8, **dadurch gekennzeichnet, dass** das Gehäuse (7) mit einer beliebigen Anzahl von Ventilen (8, 8') verbunden ist, die jeweils in unterschiedlichen Positionen in die Ausnehmung (6) des Gehäuses (7) münden und die Komponenten des Gemisches in wählbarer Dosierung zuführen.

10. Dosiermaschine nach einem der Ansprüche 1 bis 9, **dadurch gekennzeichnet**, die Mischerkammer (5) lösbar mit dem Gehäuse (7) verbunden ist und eine topfförmige Ausnehmung (4) besitzt, innerhalb der der Rotor (3) in der Betriebsposition ruht, und eine Kanüle (10) zur Applikation des Gemisches.

## Claims

1. Dosing machine for preparing a mixture, in particular a two-component adhesive, comprising a housing (7) and a mixer shaft (2) mounted therein, on the end of which shaft a rotor (3) is arranged, the mixer shaft (2) being movable along a longitudinal axis from an operating position, in which the rotor (3) engages in a mixer chamber (5) that is detachably connected to the housing (7), and, after removal from the mixer chamber (5), into a maintenance position in which the rotor (3) is freely accessible, **characterized in that** the mixer shaft (2) is mounted within a hollow shaft (11) and can be connected to the hollow shaft (11) for conjoint rotation, the hollow shaft (11) being rotatably mounted within the housing (7).

2. Dosing machine according to claim 1, **characterized in that** the hollow shaft (11) is connected via a coupling (15) to a motor (14), preferably a mixer motor, the speed of which can be selected according to the flow rate of the mixture of the dosing machine (1).

3. Dosing machine according to either claim 1 or claim 2, **characterized in that** the hollow shaft (11) and the mixer shaft (2) can be detachably interconnected in two spaced-apart positions by means of a lock (12), for which purpose receiving holes (18, 18') are preferably provided in the hollow shaft (11) and the mixer shaft (2), through which holes a bolt (17) passes.

4. Dosing machine according to any of claims 1 to 3, **characterized in that** the hollow shaft (11) is guided within the housing (7) by ball bearings or roller bearings.

5. Dosing machine according to any of claims 1 to 4, **characterized in that** at least one rotary seal (16) is arranged between the hollow shaft (11) and the housing (7).

6. Dosing machine according to any of claims 1 to 5, **characterized in that** the mixer shaft (2) is guided within the hollow shaft (11) by sliding bearings.

7. Dosing machine according to any of claims 1 to 6, **characterized in that** at least one translational seal (13) is arranged between the hollow shaft (11) and the mixer shaft (2).

8. Dosing machine according to any of claims 1 to 7, **characterized by** a recess (4) within the housing (7), in which recess part of the rotor (3) rests in the operating position.

9. Dosing machine according to any of claims 1 to 8, **characterized in that** the housing (7) is connected to any number of valves (8, 8') which each lead into the recess (6) in the housing (7) in different positions and supply the components of the mixture in selectable dosages.

10. Dosing machine according to any of claims 1 to 9, **characterized in that** the mixer chamber (5) is detachably connected to the housing (7) and has a pot-shaped recess (4) within which the rotor (3) rests in the operating position, and a cannula (10) for applying the mixture.

## Revendications

1. Machine de dosage destinée à la préparation d'un mélange, en particulier d'un adhésif à deux constituants, comportant un boîtier (7) et un arbre mélangeur (2) monté à l'intérieur de celui-ci, un rotor (3) étant disposé au niveau de la face frontale de l'arbre mélangeur, l'arbre mélangeur (2) pouvant être déplacé dans l'axe longitudinal depuis une position de fonctionnement, dans laquelle le rotor (3) s'insère dans une chambre de mélange (5) reliée au boîtier (7) de manière amovible, après le retrait de la chambre de mélange (5), vers une position de maintenance dans laquelle le rotor (3) est librement accessible,
**caractérisée en ce que**
l'arbre mélangeur (2) est monté à l'intérieur d'un arbre creux (11) et peut être relié à l'arbre creux (11) de manière solidaire en rotation, l'arbre creux (11) étant monté rotatif à l'intérieur du boîtier (7).

2. Machine de dosage selon la revendication 1, **caractérisée en ce que** l'arbre creux (11) est relié, par l'intermédiaire d'un accouplement (15), à un moteur (14), de préférence à un moteur de mélangeur, dont la vitesse de rotation peut être choisie en fonction du débit du mélange de la machine de dosage (1).

3. Machine de dosage selon l'une des revendications 1 ou 2, **caractérisée en ce que** l'arbre creux (11) et l'arbre mélangeur (2) peuvent être reliés l'un à l'autre de manière amovible au moyen d'un verrou (12) dans deux positions espacées, des alésages de logement (18, 18') qui sont traversés par un boulon (17) étant de préférence prévus à cet effet dans l'arbre creux (11) et l'arbre mélangeur (2).

4. Machine de dosage selon l'une des revendications 1 à 3, **caractérisée en ce que** l'arbre creux (11) est guidé à l'intérieur du boîtier (7) par des paliers à billes ou à roulement.

5. Machine de dosage selon l'une des revendications 1 à 4, **caractérisée en ce qu'**au moins un joint d'étanchéité rotatif (16) est disposé entre l'arbre creux (11) et le boîtier (7).

6. Machine de dosage selon l'une des revendications 1 à 5, **caractérisée en ce que** l'arbre mélangeur (2) est guidé à l'intérieur de l'arbre creux (11) par des paliers lisses.

7. Machine de dosage selon l'une des revendications 1 à 6, **caractérisée en ce qu'**au moins un joint d'étanchéité de translation (13) est disposé entre l'arbre creux (11) et l'arbre mélangeur (2).

8. Machine de dosage selon l'une des revendications 1 à 7, **caractérisée par** un évidement (4) à l'intérieur du boîtier (7), une partie du rotor (3) reposant dans l'évidement en position de fonctionnement.

9. Machine de dosage selon l'une des revendications 1 à 8, **caractérisée en ce que** le boîtier (7) est relié à un nombre quelconque de soupapes (8, 8'), lesquelles débouchent respectivement dans l'évidement (6) du boîtier (7) dans différentes positions et amènent les constituants du mélange à un dosage pouvant être choisi.

10. Machine de dosage selon l'une des revendications 1 à 9, **caractérisée en ce que** la chambre de mélange (5) est reliée au boîtier (7) de manière amovible et **en ce qu'**elle présente un évidement en forme de pot (4), à l'intérieur duquel le rotor (3) repose en position de fonctionnement, et une canule (10) destinée à l'application du mélange.
